# EUROPÄISCHE PATENTSCHRIFT

(11) **EP 1 799 394 B1**
(45) Veröffentlichungstag und Bekanntmachung des Hinweises auf die Patenterteilung: **17.07.2013**
(21) Anmeldenummer: 05801448.1
(22) Anmeldetag: 04.10.2005
(51) Int. Cl.: B23K 37/04, B23K 26/24, B23K 26/02, B60N 2/68

(54) **VERFAHREN ZUM SCHWEISSEN EINER STRUKTUR**
METHOD FOR WELDING A STRUCTURE
PROCÉDÉ POUR SOUDER UNDE STRUCTURE

(30) Priorität: 07.10.2004 DE 102004049115
(43) Veröffentlichungstag der Anmeldung: 27.06.2007
(73) Patentinhaber: Johnson Controls GmbH, 51399 Burscheid (DE)
(72) Erfinder: GEISLER, Axel, 51399 Burscheid (DE); HAMERS, Michael, 35216 Biedenkopf (DE); SCHMITTER, Andreas, 42111 Wuppertal (DE); KIRCHHOF, Henri, 50226 Frechen-Kleinköningsdorf (DE); COOPER, Matthew, 63801 Kleinostheim (DE); BRONICH, Sven, 51377 Leverkusen (DE); OTTO, Jürgen, 51399 Burscheid (DE); HEMMELMANN, Klaus, 51519 Odenthal (DE)
(74) Vertreter: Wolff, Felix
(86) Internationale Anmeldenummer: PCT/EP2005/054991
(87) Internationale Veröffentlichungsnummer: WO 2006/040276

(56) Entgegenhaltungen:
- EP-A- 0 919 306
- DE-A1- 19 905 215
- JP-A- 2000 174 152
- US-A- 3 584 657
- US-A- 4 237 364
- PATENT ABSTRACTS OF JAPAN Bd. 007, Nr. 215 (M-244), 22. September 1983 (1983-09-22) & JP 58 110176 A (TOYOTA JIDOSHA KOGYO KK), 30. Juni 1983 (1983-06-30)

## Beschreibung

Die vorliegende Erfindung betrifft ein Verfahren zum Schweißen einer Struktur aus n aneinanderliegenden Lagen, wobei n ≥ 3 ist, und mit einer Oberfläche gemäß dem Oberbegriff des Anspruchs 1. Ein solches Verfahren ist aus der JP 58 110 176 bekannt.

In der industriellen Fertigung, insbesondere im Automobilbau, werden immer komplexere Strukturelemente hergestellt, die aus mehreren Teilen bestehen, die auf mehreren Ebenen angeordnet sind und die miteinander verschweißt werden müssen. Diese Verschweißung gestaltet sich derzeit noch vergleichsweise aufwendig, weil die Struktur während des Schweißens gewendet werden muss.

Es war daher die Aufgabe der vorliegenden Erfindung, ein Verfahren zur Verfügung zu stellen, dass die Nachteile des Standes der Technik nicht aufweist.

Gelöst wird die Aufgabe mit einem Verfahren nach Anspruch 1.

Eine mit dem erfindungsgemäßen Verfahren hergestellte Struktur besteht aus n aneinanderliegenden Lagen, wobei n ≥ 3 ist, und mit einer Oberfläche, wobei jeweils zwei sich berührende Lagen durch eine Schweißnaht miteinander verbunden sind und die Lagen zwischen der Oberfläche und der jeweiligen Schweißnaht eine durchgehende Ausnehmung aufweisen, durch die hindurch ein Schweißmittel zur Herstellung der Schweißnaht bis zu den jeweils zu verschweißenden Lagen hindurchführbar ist.

Mit der Struktur ist es möglich, ein Laminat bestehend aus mehreren Lagen zusammen zu schweißen, nachdem die Lagen übereinander geschichtet worden sind. Bei der Struktur sind jeweils sich berührende Lagen miteinander verschweißt. Die Struktur ist einfach und kostengünstig herstellbar und weißt eine große mechanische Stabilität auf.

Die Lagen können aus jedem beliebigen, schweißbaren Werkstoff bestehen. Vorzugsweise handelt es sich bei den Lagen jedoch um Metallbleche, besonders bevorzugt Stahlbleche.

Vorzugsweise weist die Struktur mindestens n-2 Ausnehmungen auf. Durch diese Ausführungsform ist es möglich, jeweils alle sich berührenden Lagen der Struktur miteinander zu verschweißen.

In einer anderen Ausführungsform weist diese mindestens eine, vorzugsweise jedoch mehrere, sich zur Oberfläche hin erweiternde Öffnung auf. Diese Ausführungsform hat den Vorteil, dass innerhalb einer Öffnung alle sich berührenden Lagen der Struktur jeweils miteinander verbunden werden können. Besonders bevorzugt hat diese Öffnung zumindest teilweise eine treppenartige Struktur. Der Laserstrahl wird dann jeweils auf die Stufen der Treppe gerichtet, um die beiden darunter befindlichen Lagen miteinander zu verschweißen.

Für den Fall, dass die Struktur mehrere Öffnungen aufweist, werden diese Öffnungen auch dazu verwendet, die Lagen der Struktur zueinander auszurichten. Dies kann beispielsweise durch einen Justierstempel erfolgen, der reversibel in die jeweilige Öffnung eingeführt wird und die Position von mindestens zwei, vorzugsweise jedoch allen Lagen der Struktur zueinander fixiert.

Es war für den Fachmann überaus erstaunlich und nicht zu erwarten, dass das erfindungsgemäße Verfahren sehr einfach und kostengünstig durchgeführt werden kann. Die herzustellende Struktur muss bei dem Herstellungsprozess nicht in Ihrer Lage verändert werden, so dass sie sehr schnell und kostengünstig herstellbar ist.

Es wird durch eine Ausnehmung in der ersten Ebene zunächst mindestens ein Niederhalter geführt, um die zu schweißenden Teile vor und/oder währen des Schweißens zusammenzuhalten.

Weiterhin bevorzugt wird durch eine Ausnehmung in der ersten Ebene ein Mittel geführt, um eine Plasmawolke, die sich zwischen der ersten und der zweiten Ebene befindet, wegzublasen.

Bei einer besonders bevorzugten Ausführungsform werden nicht nur auf der ersten, sondern auch auf der zweiten Ebene Schweißnähte angeordnet.

In einer am meisten bevorzugten Ausführungsform wird die Struktur beim Schweißen in Ihrer Lage nicht verändert.

Im folgenden wird die Erfindung anhand der Figuren 1 bis 3 erläutert. Diese Erläuterungen sind lediglich beispielhaft und schränken den allgemeinen Erfindungsgedanken nicht ein.
**Figur 1** zeigt eine Ausführungsform der Struktur,
**Figur 2** zeigt die Struktur als Laminat und
**Figur 3** zeigt eine weitere Ausführungsform des Laminates.

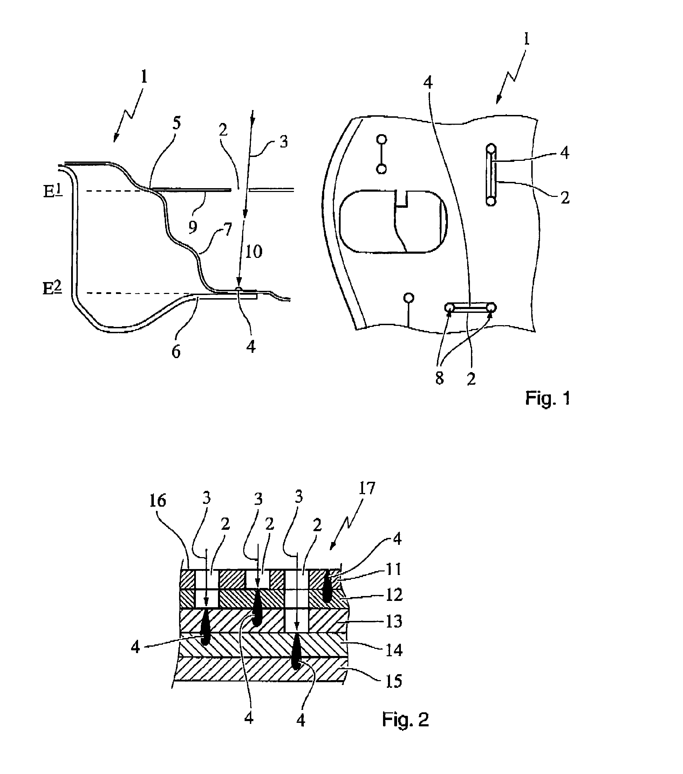

**Figur 1** zeigt die Struktur in zwei Ansichten. Wie im linken Teil der **Figur 1** sichtbar, besteht die Struktur 1 aus drei Teilen 6, 7, 9, die durch die Schweißnähte 4, 5 zusammengeschweißt sind. Die Struktur weist zwei Ebenen E1 und E2 auf, so dass sich ein Hohlraum 10 ausbildet. Erfindungsgemäß weist die Struktur in der Ebene E1 eine Ausnehmung 2 auf, durch die ein Laserstrahl 3 geführt werden kann, der eine Schweißung auf der Ebene E2 zur Herstellung der Schweißnaht 4 durchführt. Dadurch muss das Bauteil während des Schweißens nicht gedreht werden. Alle Schweißungen können von oben vorgenommen werden.

Wie aus der rechten Darstellung ersichtlich sind die Ausnehmungen 2 so groß gestaltet, dass nicht nur eine Schweißnaht 4 anbringbar ist, sondern dass durch die Ebene E1 auch Niederhalter 8 geführt werden können, um Bleche auf der Ebene E2, die zusammengeschweißt werden müssen vor und während des Schweißens zusammenzuhalten. Dies gilt ebenso für extra Löcher in Ebene E1 für die Niederhalter 8.

**Figur 2** zeigt ein Laminat 17 bestehend aus fünf Blechlagen 11-15, wobei jeweils zwei sich berührende, d. h. in dem vorliegenden Fall direkt aufeinanderliegende Lagen durch die Schweißnähte 4 miteinander verbunden sind. Erfindungsgemäß weist das Laminat 17 Bohrungen 2 auf, die jeweils von der Oberfläche 16 des Laminates 17 bis zu der Lage reichen, die mit der darunterliegenden Lage verbunden werden soll. In diese Öffnung 2 wird zur Verbindung der jeweiligen Lagen untereinander ein Schweißmittel, in dem vorliegenden Fall ein Laserstrahl, eingeführt, der die sich an die Ausnehmung anschließende Lage aufschmelzt, so dass diese sich nach deren anschließender Abkühlung stoffschlüssig miteinander verbinden. Der Fachmann erkennt, dass bei großflächigen Laminaten die jeweiligen Lagen des Laminates mehrfach miteinander verbunden sind oder die jeweiligen Schweißnähte 4 großflächig gestaltet sind.

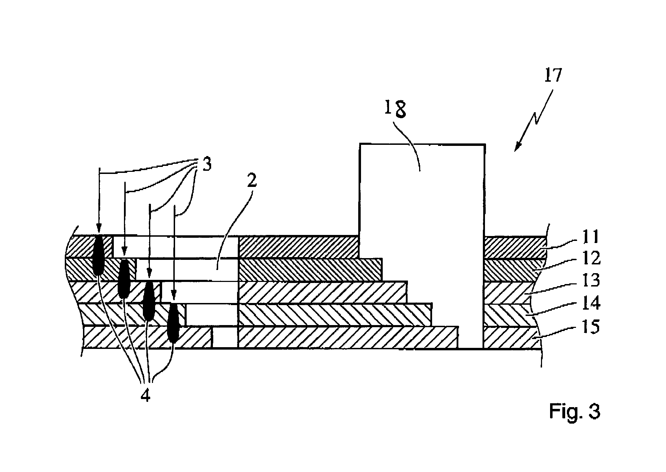

**Figur 3** zeigt eine weitere Ausführungsform des Laminats. In dem vorliegenden Beispiel erstreckt sich die Ausnehmung 2 durch das gesamte Laminat und weist eine treppenartige Struktur auf. Das Schweißmittel, in dem vorliegenden Fall ein Laserstrahl 3, wird während des Schweißens auf die jeweilige Treppenstufe gerichtet und schmelzt partiell zumindest die darunterliegende Lage, vorzugsweise jedoch zwei darunterliegende Lagen auf, so dass sich diese nach deren Abkühlung stoffschlüssig miteinander verbinden. In die weiter rechts dargestellte Ausnehmung 2 ist in dem vorliegenden Beispiel ein Justierstempel 18 eingefügt worden, der für eine Ausrichtung der Lagen 11-15 während des Schweißens dient. Dieser Stempel wird immer in die Ausnehmungen eingefügt, die gerade nicht geschweißt werden.

**Bezugszeichenliste:**

| | |
|---|---|
| 1 | Struktur |
| 2 | Ausnehmung |
| 3 | Schweißmittel |
| 4, 5 | Schweißnaht |
| 6, 7, 9 | zu schweißende Teile |
| 8 | Niederhalter |
| E1 | erste Ebene |
| E2 | zweite Ebene |
| 10 | Hohlraum |
| 11 - 15 | Lagen |
| 16 | Oberfläche des Laminates |
| 17 | Laminat |
| 18 | Justiermittel, Justierstempel |

## Patentansprüche

1. Verfahren zum Schweißen einer Struktur aus n aneinander liegenden Lagen (11-15), wobei n ≥ 3 ist, und mit einer Oberfläche (16), wobei jeweils zwei sich berührende Lagen (11 - 15) durch eine Schweißnaht (4) miteinander verbunden werden, wobei die Lagen (11- 15) mehrere durch alle Lagen durchgehende, sich zur Oberfläche hin erweiternde, eine Öffnung bildende Ausnehmungen (2) aufweisen, durch die hindurch ein Schweißmittel (3) zur Herstellung der Schweißnaht (4) von der Oberfläche (16) bis zu den jeweils zu verschweißenden Lagen (11-15) hindurchgeführt wird, **dadurch gekennzeichnet, dass** die Struktur mehrere Öffnungen aufweist und in die Öffnungen (2) zumindest teilweise Justierstempel (18) reversibel eingeführt werden.

2. Verfahren nach Anspruch 1, **dadurch gekennzeichnet, dass** die Ausnehmung (2) jeweils so groß vorgesehen wird, dass durch sie ein, vorzugsweise zwei, Niederhalter (8) hindurchführbar ist(sind).

3. Verfahren nach einem der voranstehenden Ansprüche, **dadurch gekennzeichnet, dass** die Schweißnaht (4) als eine Laserschweißnaht ausgeführt wird.

4. Verfahren nach einem der voranstehenden Ansprüche, **dadurch gekennzeichnet, dass** durch die Ausnehmungen (2) ein Mittel, vorzugsweise ein Rohr, mit dem eine Plasmawolke wegblasbar ist, eingeführt wird.

## Claims

1. Method for welding a structure comprising n layers (11-15) which lie against one another, where n ≥ 3, and having a surface (16), wherein respectively two layers (11-15) in mutual contact are connected to one another by a welded seam (4), wherein the layers (11-15) have a plurality of recesses (2), which pass through all layers, extend as far as the surface, form an aperture and through which a welding mechanism (3) is passed to produce the welded seam (4) from the surface (16) as far as the layers (11-15) to be respectively welded, **characterized in that** the structure has a plurality of apertures and adjusting dies (18) are inserted reversibly at least partially into the apertures (2).

2. Method according to Claim 1, **characterized in that** the recess (2) is provided in each case with such a size that one, preferably two, retainers (8) can be passed through it.

3. Method according to either of the preceding claims, **characterized in that** the welded seam (4) is in the form of a laser welded seam.

4. Method according to one of the preceding claims, **characterized in that** a mechanism, preferably a tube, with which a plasma cloud can be blown away is inserted through the recesses (2).

## Revendications

1. Procédé pour souder sur une surface (16) une structure constituée de n couches (11-15) adjacentes, n ≥ 3, deux couches (11-15) en contact mutuel étant reliées l'une à l'autre par un cordon de soudure (4), les couches (11-15) présentant plusieurs découpes (2) qui traversent toutes les couches, qui s'évasent en direction de la surface et qui forment une ouverture à travers laquelle un moyen de soudage (3) est passé depuis la surface (16) jusqu'à chacune des couches (11-15) à souder pour réaliser le cordon de soudure (4), **caractérisé en ce que**
la structure présente plusieurs ouvertures et des poinçons d'ajustement (18) sont insérés au moins partiellement et de manière réversible dans les ouvertures (2).

2. Procédé selon la revendication 1, **caractérisé en ce que** chaque découpe (2) est prévue à une taille suffisante pour pouvoir être traversée par un et de préférence deux dispositifs de retenue (8).

3. Procédé selon l'une des revendications précédentes, **caractérisé en ce que** le cordon de soudure (4) est réalisé comme cordon de soudure au laser.

4. Procédé selon l'une des revendications précédentes, **caractérisé en ce qu'**un moyen, de préférence un tube par lequel un nuage de plasma peut être soufflé, est inséré dans les ouvertures (2).
